# FASCICULE DE BREVET EUROPEEN

(11) **EP 1 987 472 B1**
(45) Date de publication et mention de la délivrance du brevet: **24.06.2009**
(21) Numéro de dépôt: 07731018.3
(22) Date de dépôt: 21.02.2007
(51) Int. Cl.: G06K 9/00

(54) **BIODETECTEUR SANS CONTACT**
BIODETEKTOR MIT KONTAKTLOSEM BETRIEB
BIODETECTOR FUNCTIONING WITHOUT CONTACT

(30) Priorité: 24.02.2006 FR 0601656
(43) Date de publication de la demande: 05.11.2008
(73) Titulaire: SAGEM Sécurité, 75015 Paris (FR)
(72) Inventeur: DUFRESNE DE VIREL, François, F-75015 Paris (FR)
(74) Mandataire: Cabinet Plasseraud
(86) Numéro de dépôt international: PCT/FR2007/000311
(87) Numéro de publication internationale: WO 2007/096520

(56) Documents cités:
- EP-A- 1 241 614
- EP-A- 1 612 714
- DE-A1- 10 046 406
- US-A1- 2003 156 741

## Description

La présente invention concerne un biodétecteur fonctionnant sans contact, ou à distance, c'est-à-dire sans qu'il soit nécessaire d'appliquer la partie corporelle qui est détectée contre une surface d'appui.

Des biodétecteurs existent, qui procèdent par reconnaissance d'une empreinte palmaire d'un utilisateur, par reconnaissance d'un contour de sa main, d'une géométrie des doigts (longueur des phalanges, position des articulations ou des plis des doigts, etc), par reconnaissance d'une empreinte digitale ou par combinaison de certains de ces procédés (voir, par exemple, DE 100 46 406). Pour cela, une image de la face interne de la main ou d'un doigt est formée par un dispositif de saisie d'image, puis l'image est analysée par un système de traitement d'image et des données de biodétection sont extraites. Ces données de biodétection sont ensuite comparées à des données de reconnaissance et/ou d'identification enregistrées dans une base de données, qui peut être locale ou distante.

L'image formée doit présenter une résolution suffisante pour permettre la reconnaissance et/ou l'identification de l'utilisateur. En particulier, dans le cas d'une reconnaissance et/ou d'une identification basée sur la totalité d'une main, et incluant le relevé d'empreintes digitales, une surface minimale de l'ordre de 15x22,5 cm² doit être imagée avec une résolution minimale de l'ordre de 0,1 mm, voire moins, pour obtenir une image complète de la main avec les doigts légèrement écartés, tout en ayant une résolution suffisante pour les empreintes digitales. Lorsqu'un capteur qui présente une surface de détection de 24x36 mm² est utilisé, un grandissement d'environ 1/6,25 est nécessaire et le capteur doit posséder entre 6 et 12 millions de pixels. La taille d'un pixel est alors d'environ 8,5 µm et la résolution obtenue est de 50 µm.

En outre, la face de la main ou du doigt dont l'image est formée doit être située avec précision dans un plan déterminé de saisie d'image, de sorte que l'image formée soit focalisée de la meilleure façon possible sur le détecteur (voir, par exemple, EP 1 612 714). Or, la profondeur de champ du dispositif de formation d'image de biodétection dépend de la taille des pixels du détecteur, du grandissement entre le plan de la main ou du doigt et le plan d'image au niveau du détecteur, ainsi que de l'ouverture du dispositif de formation d'image. Pour un grandissement donné, plus l'ouverture du dispositif de formation d'image est grande, plus la profondeur de champ est faible. Le dispositif est alors d'autant plus sensible et un éclairement réduit de la main ou du(des) doigt(s) est suffisant.

Usuellement, une surface d'appui, telle qu'une plaque de verre ou un prisme, est placée au niveau du plan de saisie d'image pour servir de référence de position. Une telle plaque d'appui est en général transparente, notamment pour permettre d'éclairer la face de la main ou du doigt dont l'image est formée, mais aussi pour permettre un bon fonctionnement du capteur et, éventuellement, pour incorporer dans cette plaque des dispositifs de détection de fraude. Les conditions de saisie d'une image de biodétection sont alors directement remplies lorsque l'utilisateur applique sa main ou son doigt sur la surface d'appui. Mais, une telle surface d'appui est salie lors de son utilisation, notamment par des dépôts gras cutanés qui sont laissés par chaque utilisateur. Une réticence de la part de l'utilisateur en résulte, pour l'utilisation de tels biodétecteurs. Des comportements culturels existent aussi, selon lesquels l'utilisateur cherche à éviter un contact cutané avec une surface externe. Le nombre d'utilisateurs d'un biodétecteur à contact est alors réduit, ou bien certains utilisateurs en font une utilisation imparfaite qui peut aboutir à des résultats de reconnaissance d'individus qui sont erronés. Dans certaines circonstances, les réticences qui sont observées pour l'utilisation de biodétecteurs à surface d'appui conduisent à ne pas installer de tels biodétecteurs, alors qu'il existe un besoin de reconnaissance et/ou d'identification individuelle, par exemple pour une raison de sécurité.

Il serait possible de demander à l'utilisateur de présenter simplement sa main ou son doigt devant une fenêtre optique sans toucher celle-ci, et le dispositif de saisie d'image de biodétection procéderait à une mise au point automatique en fonction de la distance entre l'objectif et la main ou le doigt. De tels systèmes automatiques de mise an point existent, qui sont par exemple basés sur une mesure de distance par rayonnement infrarouge. Mais ils sont complexes, nécessitent que l'objectif du dispositif de formation d'image de biodétection comporte des parties mobiles, et sont par conséquent onéreux. En outre, de tels dispositifs à mise au point automatique n'incitent pas l'utilisateur à présenter sa main en dépliant celle-ci ou en allongeant ses doigts, ni à la présenter parallèlement au plan de saisie d'image. Pour ces raisons, l'image qui est formée peut être de mauvaise qualité, ou de qualité insuffisante pour permettre une reconnaissance ou une identification de l'utilisateur.

Un but de la présente invention consiste donc à proposer un biodétecteur qui ne présente pas les inconvénients cités ci-dessus.

Pour cela, l'invention propose un biodétecteur qui permet d'enregistrer l'image d'une main ou d'au moins un doigt d'un utilisateur, par exemple pour une fonction de reconnaissance ou d'identification de celui-ci. Le biodétecteur comprend un dispositif de formation d'une image de biodétection, qui est adapté pour enregistrer l'image lorsqu'une première face de la main ou du doigt est placée sensiblement dans une portion d'un plan déterminé de saisie d'image. Cette portion de plan de saisie d'image est située dans un volume de placement de la main ou du doigt qui est dépourvu de surface de contact. Le biodétecteur comprend en outre un dispositif de projection de deux composantes d'un signe visuel, qui est adapté de sorte que ce signe est reconstitué à partir des deux composantes dans un plan de repérage sensiblement parallèle au plan de saisie d'image. Ce plan de repérage est situé, lorsque l'image de biodétection est formée, à une distance du plan de saisie d'image telle que le signe reconstitué soit visible sur une seconde face de la main ou du doigt opposée à la première face.

Eventuellement, le signe visuel peut être projeté à la fois sur le dos de la main ou sur le dessus d'un ou de plusieurs doigts, notamment pour inciter l'utilisateur à bien déplier sa main.

Un biodétecteur selon l'invention est donc du type sans contact, étant donné que l'utilisateur doit placer sa main, ou son doigt, dans un volume dépourvu de surface de contact, au niveau du plan de saisie d'image. Un tel biodétecteur ne suscite donc pas de réticence chez un utilisateur qui craindrait, consciemment ou inconsciemment, un contact cutané avec une surface externe.

En l'absence de surface d'appui, la distance adéquate de présentation de la main ou du doigt, par rapport au dispositif de formation de l'image de biodétection, est indiquée par un signe visible qui est projeté sur la main ou le(s) doigt(s). Deux composantes de ce signe sont projetées simultanément sur le dos de la main ou du(des) doigt(s). Ces composantes ne se combinent de façon constructive que dans un plan qui est situé à une distance du plan de saisie d'image correspondant à l'épaisseur de la main ou du(des) doigt(s). De cette façon, l'utilisateur avance ou recule sa main devant le dispositif de formation d'image de biodétection, jusqu'à ce qu'il voie le signe reconstitué sur le dos de sa main ou de son(ses) doigt(s). Un tel biodétecteur possède donc un mode d'utilisation intuitif, qui ne nécessite qu'une coopération simple et rapide de la part de l'utilisateur.

En outre, il n'est pas nécessaire que le dispositif de formation de l'image de biodétection soit équipé d'un objectif à mise au point automatique ("autofocus" en anglais), étant donné que l'utilisateur est amené à placer sa main ou son(ses) doigt(s) dans une position déterminée et fixe. Un tel biodétecteur peut donc posséder une conception simplifiée.

Le signe visuel reconstitué, qui est projeté sur le dos de la main ou du (des) doigt(s) pour indiquer la position adéquate à l'utilisateur, peut comprendre un idéogramme, un motif géométrique, au moins une lettre et/ou une représentation d'une partie au moins de la main ou du(des) doigt(s). Ce peut être un signe lumineux tel qu'un cercle ou la mention « OK » par exemple. Le signe est constitué par au moins deux composantes séparées, qui peuvent être des parties différentes du signe qui se superposent, se complètent ou se raccordent sur le dos de la main ou du(des) doigt(s) lorsque celui-ci est dans une position qui permet de saisir l'image de biodétection. Plus généralement, le signe visuel peut être un ensemble surfacique d'éléments graphiques, alphanumériques, ou spectraux qui sont disjoints ou groupés dans différentes zones du plan de repérage, et dont la structure ou la répartition contient des informations sensibles à un déplacement de la main selon la direction perpendiculaire au plan de saisie d'image. Cet ensemble d'éléments graphiques est séparé en au moins deux sous-ensembles qui permettent, par exemple par juxtaposition, de recomposer l'ensemble complet sous une forme identifiable par l'utilisateur, lors d'un déplacement de sa main.

Selon un mode de réalisation préféré de l'invention, le dispositif de projection des deux composantes du signe visuel comprend deux systèmes de projection adaptés pour projeter respectivement les composantes vers une zone du plan de repérage dans laquelle le signe visuel est reconstitué. Des directions de projection respectives de ces systèmes sont obliques par rapport à la direction perpendiculaire au plan de saisie d'image, et se coupent sensiblement en un point du plan de repérage. Les deux composantes du signe visuel sont alors des portions d'une image divisée qui apparaissent décalées lorsque la main ou le doigt est trop avancée, ou pas assez avancée, par rapport au dispositif de formation de l'image de biodétection, et qui apparaissent alignées, superposées ou dans un prolongement continu de l'une par rapport à l'autre lorsque la main ou le doigt sont dans la position requise pour saisir l'image de biodétection.

D'après un perfectionnement de l'invention, le biodétecteur peut comprendre en outre un système d'ajustement de la distance entre le plan de saisie d'image et le plan de repérage, cette distance étant ajustée en fonction d'une dimension de la main ou du doigt de l'utilisateur. Cette dimension de la main ou du doigt de l'utilisateur peut fournir une indication de l'épaisseur de cette main ou doigt. La distance entre le plan de saisie d'image et le plan de repérage peut alors être ajustée à la valeur de cette épaisseur, de sorte que la précision de positionnement de la main ou du doigt de l'utilisateur, par rapport au plan de saisie d'image, est améliorée.

L'invention concerne aussi un procédé de biodétection, mis en oeuvre en utilisant un biodétecteur tel que décrit précédemment. Un tel procédé peut comprendre les étapes suivantes :
/a/ de la part de l'utilisateur, placer une main ou un doigt dans un champ du dispositif de formation de l'image de biodétection ;
/b/ projeter, sur la main ou le(s) doigt(s) de l'utilisateur, d'un côté opposé au dispositif de formation d'image de biodétection, les deux composantes du signe visuel ; et
/c/ de la part de l'utilisateur, modifier une hauteur de sa main ou de son(ses) doigt(s) devant le dispositif de formation d'image de biodétection, jusqu'à ce que le signe visible apparaisse reconstitué sur la face de la main ou du doigt qui est opposée au dispositif de formation d'image de biodétection.

Une fois que le signe visible apparaît reconstitué sur la face de la main ou du doigt qui est opposée au dispositif de formation d'image de biodétection, l'image de biodétection peut être enregistrée, puis analysée pour obtenir une reconnaissance et/ou une identification de l'utilisateur.

Eventuellement, le procédé peut comprendre en outre l'étape suivante, effectuée entre les étapes /a/ et /b/ :
/a1/ ajuster une distance entre le plan de saisie d'image et le plan de repérage en fonction d'une dimension de la main ou du doigt de l'utilisateur.

Lorsque cette dimension comprend une largeur de la main ou du doigt, le procédé peut encore comprendre les étapes suivantes, effectuées entre les étapes *l*a*l* et /a1/ :
/a11/ former une image préalable de la main ou du doigt de l'utilisateur au moyen du dispositif de formation d'image de biodétection ;
/a12/ évaluer, d'après ladite image préalable, la largeur de la main ou du doigt ; et
/a13/ déduire de cette largeur une valeur d'épaisseur de la main ou du doigt de l'utilisateur.

La distance entre le plan de saisie d'image et le plan de repérage est alors ajustée à l'étape /a1/ à la valeur de l'épaisseur de la main ou du doigt de l'utilisateur qui est déduite à l'étape /a13/. Le dispositif de formation de l'image de biodétection possède alors la fonction supplémentaire de former une image préalable de la main ou du doigt, à partir de laquelle une largeur de ceile-ci peut être évaluée.

D'autres particularités et avantages de la présente invention apparaîtront dans la description ci-après de plusieurs exemples de réalisation non limitatifs, en référence aux dessins annexés, dans lesquels :
- la figure 1 illustre de façon générale l'utilisation d'un biodétecteur selon l'invention ;
- la figure 2 illustre le principe de fonctionnement d'un biodétecteur selon l'invention ;
- les figures 3a-3e représentent des exemples de signes visuels qui peuvent être utilisés dans le biodétecteur des figures 1 et 2 ;
- les figures 4a et 4b représentent un perfectionnement de l'invention, pour une biodétection basée sur une image de plusieurs doigts ; et
- la figure 5 illustre un autre perfectionnement de l'invention.

Sur ces figures, les directions V et A indiquent respectivement une direction verticale et une direction orientée vers l'ayant de la zone de placement de la main ou du doigt dans les biodétecteurs représentés. Les directions G et D sont orientées respectivement vers la gauche et vers la droite d'un utilisateur des biodétecteurs. En outre, les dimensions et positions des différentes parties de biodétecteurs qui sont représentées ne sont qu'indicatives, et ne correspondent pas à des dimensions ou rapports de dimensions réels. Enfin, l'invention est décrite en détail dans le cadre d'un détecteur d'empreinte digitale, mais elle peut être transposée sans difficulté à un biodétecteur qui est destiné à former une image d'une partie ou de l'ensemble de la face interne de la main, par exemple lorsque la reconnaissance est basée sur l'empreinte palmaire, le contour de la main ou la géométrie des doigts.

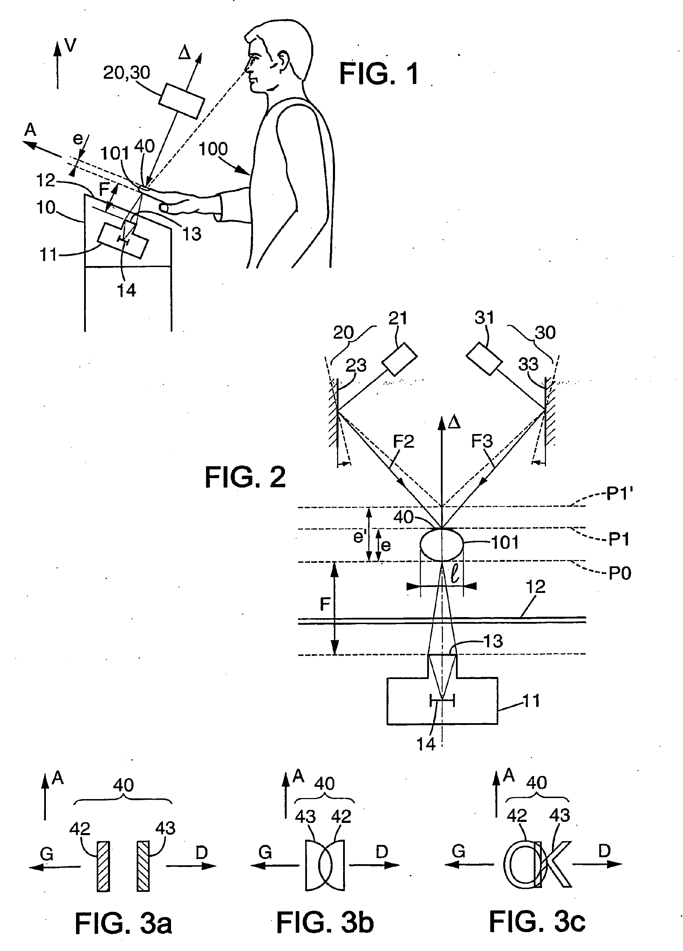

Conformément à la figure 1, un biodétecteur comprend une partie principale 10 et deux systèmes de projection d'un signe visuel, référencés 20 et 30. La partie 10 comprend un dispositif 11 de formation et d'enregistrement d'une image de biodétection. Le dispositif 11 est placé en dessous d'une fenêtre optique transparente 12, et comprend lui-même un objectif 13 et une matrice de photodétecteurs 14. La fenêtre transparente 12 peut avoir une fonction de protection de l'objectif 13. L'objectif 13 et la matrice 14 sont disposés de façon à former, sur la matrice au travers de la fenêtre 12, une image d'un doigt placé à une distance F devant l'objectif. La distance F est la distance de mise au point du dispositif 11, ou «focus» en anglais. Elle est supposée fixe dans la suite de cette description. Δ désigne l'axe de prise de vue du dispositif de formation d'image de biodétection 11.

La matrice 14 peut être sélectionnée en fonction du rapport entre la dimension de l'image de biodétection et la résolution désirée. Elle peut être par exemple de dimensions 24 x 36 mm² et comprendre au moins 12,5 millions de pixels. La distance F. est optimisée d'une façon connue en soi, pour obtenir un grandissement compatible avec une image qui couvre une partie suffisante de la main ou du(des) doigt(s). Typiquement, une résolution de 50 µm est adaptée pour une reconnaissance basée sur les empreintes digitales.

Pour utiliser le biodétecteur, un utilisateur 100 présente la face interne de son index 101 devant l'objectif 13, sensiblement à la distance F de celui-ci. Lorsque son doigt 101 est correctement positionné, à distance de la fenêtre 12, les systèmes 20 et 30 forment un signe reconstitué 40 sur la face externe, ou face supérieure, de son doigt, par exemple dans la zone de l'ongle. Eventuellement, le signe peut en outre indiquer l'emplacement auquel le doigt doit être présenté à l'intérieur d'un plan perpendiculaire à l'axe Δ, c'est-à-dire selon les directions A, G et D.

De préférence, la fenêtre 12 et l'objectif 13 sont disposés dans la partie 10 du biodétecteur de sorte que, lorsque le doigt 101 est correctement positionné pour permettre la saisie d'une image de biodétection, la surface interne du doigt est située à une distance assez courte de la fenêtre 12. A titre d'exemple, cette distance peut être inférieure à 2 cm, de préférence comprise entre 5 mm et 1 cm. De cette façon, bien que l'utilisateur ne touche pas la fenêtre 12, la proximité du doigt 101 par rapport à la fenêtre 12 est avantageuse car elle incite l'utilisateur à déplier correctement son doigt, ou sa main, et à le présenter parallèlement à la fenêtre. Ainsi, une plus grande partie du doigt ou de la main est correctement placée pour permettre l'enregistrement d'une image de biodétection qui présente une qualité suffisante.

Le biodétecteur peut comprendre en outre un système d'éclairage (non représenté), qui est situé de façon à éclairer la face interne du doigt 101, afin d'obtenir une image de biodétection qui présente un contraste suffisant. Avantageusement, le système d'éclairage peut être situé dans la partie 10 du biodétecteur et éclaire le doigt 101 de l'utilisateur au travers de la fenêtre 12 lorsque l'image de biodétection est saisie. Alternativement, il peut être situé de chaque côté de la partie 10 du biodétecteur, et être associé à des moyens de renvoi de la lumière appropriés pour éclairer la surface inférieure du doigt 101. La direction d'éclairage peut être inclinée par rapport à l'axe Δ, notamment pour renforcer un contraste de l'image de biodétection qui est saisie, par exemple par effet d'ombrage des reliefs cutanés de l'empreinte digitale.

Eventuellement, pour éviter des perturbations de l'image de biodétection qui est saisie par des lumières extérieures, ou pour raison de discrétion, le volume de placement de la main au dessus de la fenêtre 12 peut être cloisonné, tout en laissant un champ de vision libre pour l'utilisateur 100 afin qu'il puisse regarder le signe visuel 40 projeté sur sa main ou sur son doigt.

La figure 2 représente les éléments du biodétecteur dans un plan contenant l'axe Δ et parallèle aux directions G et D. La distance F définit un plan de saisie d'image de biodétection, noté P0 et perpendiculaire à l'axe Δ. Lorsque la face interne du doigt 101 est approximativement située dans le plan P0, le dispositif 11 saisit et enregistre une image des empreintes digitales qui est nette.

Les systèmes de projection 20 et 30 comprennent chacun un projecteur 21, respectivement 31, et un miroir 23, respectivement 33, qui est disposé à la sortie du système correspondant, de chaque côté du volume de placement du doigt ou de la main de l'utilisateur au dessus de la fenêtre 12. Les deux projecteurs 21 et 31 produisent des faisceaux lumineux respectifs F2 et F3, qui sont représentés par leurs directions respectives. Les miroirs 23 et 33 réfléchissent respectivement des faisceaux F2 et F3 qui, après réflexion, peuvent former chacun un angle compris entre 20 et 70 degrés, par exemple d'environ 45 degrés, avec l'axe Δ. Les faisceaux F2 et F3 convergent en un point situé à une distance e au dessus du plan P0. Lorsque le doigt 101 de l'utilisateur 100 est en position correcte pour permettre la saisie d'une image de biodétection qui est nette, les faisceaux F2 et F3 convergent sur le dessus du doigt 101, en formant le signe 40 qui est visible par l'utilisateur 100.

A titre d'exemple, le signe 40 peut être constitué de deux traits lumineux parallèles à la direction A, conformément à la figure 3a. Chaque trait est une composante du signe 40 qui est projetée par l'un des systèmes 20 ou 30. Le trait 42 peut être ainsi projeté par le système 20 et le trait 43 peut être projeté par le système 30. Les miroirs 23 et 33 peuvent être orientés de sorte que le signe 40 est formé à la distance e au dessus du plan P0 par la superposition des deux traits 42 et 43. Selon un perfectionnement particulier, le faisceau F2 peut être de couleur rouge et le faisceau F3 peut être de couleur bleue. Ainsi, lorsque le doigt 101 de l'utilisateur 100 est trop proche de la partie 10 du biodétecteur, le trait rouge 42 apparaît à droite du trait bleu 43 sur le dessus du doigt 101. Inversement, le trait rouge 42 apparaît à gauche du trait bleu 43 sur le dessus du doigt 101 lorsque le doigt est trop éloigné de la partie 10 (situation représentée sur la figure 3a). Lorsque le doigt 101 est à la bonne distance de la partie 10 du biodétecteur, les deux traits 42 et 43 sont superposés et forment un trait unique de couleur violette. Il est ainsi possible, pour l'utilisateur 100, de juger rapidement s'il place son doigt à la bonne hauteur au dessus de la fenêtre 12, et de corriger la hauteur de celui-ci si nécessaire. Le plan dans lequel les deux traits 42 et 43 apparaissent superposés l'un à l'autre sur le dessus du doigt 101 est appelé plan de repérage, et noté P1 sur la figure 2. La distance entre les plans P0 et P1 correspond alors à l'épaisseur du doigt 101. De préférence, le plan P0 est situé à une distance inférieure à 2 cm de la fenêtre 12.

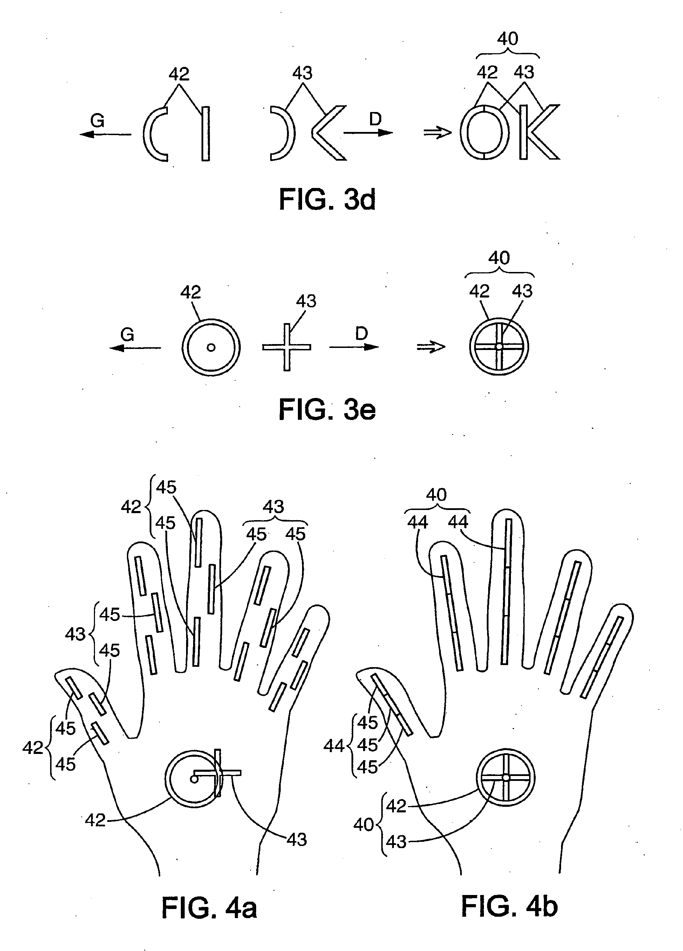

Les figures 3b et 3c correspondent à la figure 3a, pour des signes visuels en forme de disque lumineux ou de sigle « OK ». Chaque composante 42, 43 du signe 40 est un demi-disque coupé parallèlement à la direction A dans le premier cas, et est l'une des deux lettres O ou K dans le second cas. La bonne hauteur du doigt 101 au dessus de la fenêtre 12 est indiquée par la juxtaposition des deux demi-disques pour former un disque complet et régulier, ou par la juxtaposition des deux lettres pour former l'indication « OK ». Selon une autre possibilité, les lettres O et K sont chacune coupées en deux parties droite et gauche, respectivement 42 et 43, et la bonne hauteur du doigt 101 est indiquée par raccordement, ou raboutage, entre les deux parties de chaque lettre (figure 3d). Dans encore un autre exemple de signe visuel, les deux composantes sont respectivement un cercle 42 et une croix 43 destinée à être amenée au centre du cercle lorsque doigt est déplacé vers la hauteur correcte au dessus de la fenêtre 12 (figure 3e).

Lorsque la biodétection est basée sur des caractéristiques de plusieurs doigts, tel que représenté aux figures 4a et 4b, le signe visuel 40 peut comprendre des segments rectilignes 44 qui désignent chacun l'emplacement d'un doigt dans le plan de repérage P1, et la direction d'extension du doigt dans ce plan. Chaque segment 44 peut lui-même être composé de plusieurs segments élémentaires 45 qui appartiennent à l'une ou l'autre des deux composantes 42 et 43 du signe visuel 40. Les segments élémentaires 45 d'un même segment 44 apparaissent alors décalés lorsque la main n'est pas à la bonne hauteur au dessus de la fenêtre 12 (figure 4a), et alignés pour former des segments 44 continus lorsque l'utilisateur 100 a placé ses doigts à la bonne hauteur au dessus de la fenêtre 12, et les a écartés de sorte que chaque segment 44 est projeté sur un doigt, selon l'extension de celui-ci (figure 4b). De telles composantes 42, 43 en forme de segments 44 désignent plus précisément l'emplacement adéquat des doigts parallèlement à la fenêtre 12.

De retour à la figure 2, le plan de repérage P1 peut être déplacé en variant les inclinaisons des directions de projection des deux composantes du signe 40. Pour cela, des inclinaisons respectives des deux miroirs orientables 23 et 33 sont modifiées, de façon à varier symétriquement les inclinaisons des faisceaux F2 et F3 dans un plan perpendiculaire au plan de saisie d'image P0. De cette façon, la position du signe visuel reconstitué 40 peut être décalée le long de l'axe Δ.

Des moteurs pas-à-pas (non représentés) peuvent être utilisés pour orienter simultanément les miroirs 23 et 33, selon une variation continue ou discrète. Lorsque les orientations des deux miroirs sont modifiées symétriquement, le plan de repérage P1 dans lequel le signe visuel 40 est reconstitué est déplacé le long de l'axe Δ. Sur la figure 2, P1' indique une position du plan de repérage qui est décalée vers le haut par rapport à la position indiquée par P1.

Selon un mode de réalisation alternatif, les directions des faisceaux de projection F2 et F3 peuvent être variées en utilisant des prismes circulaires à facettes. D'une façon connue de l'Homme du métier, un prisme circulaire présente des facettes qui sont inclinées différemment de façon à varier, par rotation du prisme, l'inclinaison d'un faisceau émergent produit à partir d'un faisceau incident fixe. De tels prismes peuvent être disposés à la place des miroirs 23 et 33.

Eventuellement, la distance entre le plan de repérage et le plan de saisie d'image P0 peut être adaptée en fonction d'une dimension évaluée du doigt 101. Cette dimension peut être, par exemple, une largeur I du doigt 101 parallèlement aux directions G et D. Lorsque l'utilisateur 100 présente son doigt pour la première fois au dessus de la fenêtre 12, à une distance quelconque de celle-ci, une première image du doigt est saisie, par exemple au moyen du dispositif 11, qui est ensuite traitée par un procédé de détection de contour. De tels procédés d'analyse d'image sont supposés connus de l'Homme du métier. La largeur I du doigt 101 est ainsi évaluée, et une épaisseur e du doigt en est déduite. L'épaisseur e peut être déterminée en utilisant une formule empirique de conversion entre la largeur I du doigt et son épaisseur, ou en utilisant une courbe de correspondance enregistrée. En général, la section du doigt présente une forme ovale, et l'épaisseur e du doigt peut être calculée à partir de sa largeur I en utilisant une relation de proportionnalité.

Il est à noter que la première image du doigt qui est ainsi saisie par le dispositif 11 peut être floue, mais elle permet néanmoins d'évaluer la largeur du doigt 101 avec une précision suffisante.

Alternativement, pour la première image d'évaluation de la largeur du doigt 101, la distance e entre les plans P0 et P1 peut être établie en fonction d'une évaluation moyenne des doigts ou des mains d'une population d'utilisateurs à laquelle le biodétecteur est destiné.

Les miroirs 23 et 33 sont alors orientés pour amener le plan de repérage à une distance du plan de saisie d'image P0 égale à l'épaisseur du doigt 101. Ainsi, le plan de saisie d'image P0 est fixe par rapport à la partie 10 du biodétecteur, et la distance entre le plan P0 et le plan de repérage est ajustée par déplacement de ce dernier. Sur la figure 2a, les références P1 et P1' correspondent à deux positions du plan de repérage, respectivement pour un doigt fin d'épaisseur e et un doigt épais d'épaisseur e'. Lorsque le plan de repérage est situé à une distance du plan de saisie d'image P0 qui est sensiblement égale à l'épaisseur du doigt 101, une seconde image de la face interne du doigt est saisie par le dispositif 11. Cette seconde image présente alors une netteté suffisante pour permettre une reconnaissance et/ou une identification de l'utilisateur 100.

Il est entendu que d'autres dispositifs visuels de repérage de la hauteur d'un plan peuvent être utilisés, qui sont connus de l'Homme du métier. De façon générale, un tel dispositif peut être utilisé dans un biodétecteur selon l'invention dans la mesure où il permet de repérer la hauteur d'un plan avec une précision supérieure ou sensiblement identique à la profondeur de champ du dispositif de formation de l'image de biodétection.

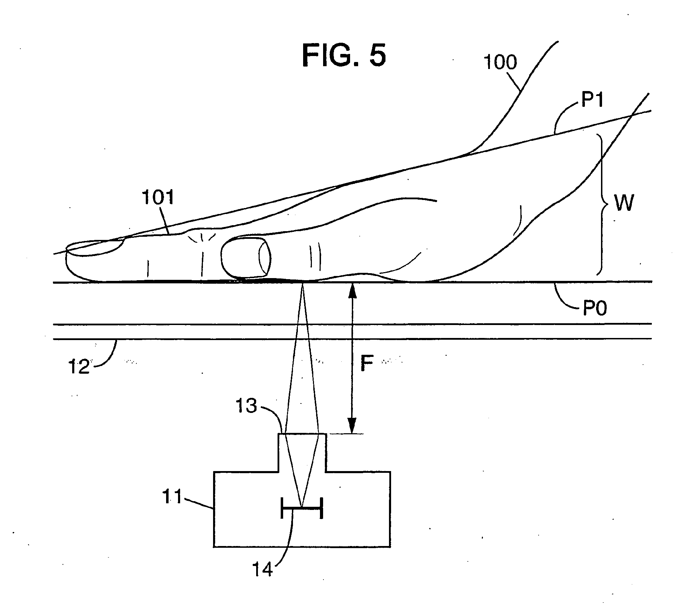

En outre, des perfectionnements d'un biodétecteur selon l'invention peuvent être ajoutés par rapport aux modes de réalisation qui ont été décrits en détail ci-dessus. Parmi ces perfectionnements, on peut citer :
- l'ajout d'un système particulier de déclenchement de la prise d'image de biodétection. Le biodétecteur peut notamment fonctionner par acquisition automatique d'images en continu tant que la présence d'un doigt est détectée au dessus de la fenêtre 12, puis par sélection de l'une des images qui présente une netteté et/ou une résolution suffisante ;
- une adaptation des projecteurs 21 et 31, permettant de réduire une déformation de chaque composante 42, 43 du signe 40 qui est provoquée par l'inclinaison des faisceaux F2 et F3 par rapport à la face externe du doigt 101. Par exemple, un motif de chaque composante 42, 43 qui est éclairé à l'intérieur du projecteur 21 ou 31 peut être incliné par rapport à la direction de projection correspondante, pour compenser l'inclinaison de chaque faisceau F2, F3 par rapport à l'axe Δ au niveau du plan de repérage P1. Une telle adaptation des projecteurs 21 et 31 peut être nécessaire si chaque composante 42, 43 du signe visuel possède une extension importante. En particulier, il est ainsi possible de prévoir que le plan de saisie d'image P0 et le plan de repérage P1 forment entre eux un espace W d'épaisseur variable qui correspond au profil d'épaisseur de la main de l'utilisateur 100, comme représenté sur la figure 5 ;
- l'objectif 13 du dispositif 11 de formation de l'image de biodétection peut être équipé d'un système de focalisation automatique, pour réduire la précision qui est nécessaire pour le positionnement du doigt au dessus de la partie 10 du biodétecteur. Dans ce cas, le plan de saisie d'image P0 peut être déplacé en fonction de l'épaisseur du doigt, à la place de ou en combinaison avec un ajustement de la position du plan de repérage P1 ;
- un système de traitement d'image peut être associé au biodétecteur, qui permet d'améliorer la qualité de l'image de biodétection qui est enregistrée. L'utilisation d'un tel système de traitement d'image peut être préférable à celle d'un système de focalisation automatique, notamment parce qu'il ne requiert pas de pièces mobiles dans la partie 10 du biodétecteur ;
- le biodétecteur peut comprendre un système de télémétrie adapté pour déterminer la distance entre la main ou le doigt 101 et le dispositif 11, et pour commander un déplacement du plan de repérage P1 le long de l'axe Δ, afin d'amener l'utilisateur à placer sa main ou son doigt à la distance correcte de la fenêtre 12. Alternativement, le système de télémétrie peut être adapté pour commander un réglage du système de focalisation automatique ;
- la matrice de photodétecteurs 14 peut être remplacée par une barrette de photodétecteurs. Dans ce cas, l'utilisateur 100 doit déplacer sa main ou son doigt dans le champ du dispositif 11, pour permettre une saisie progressive de l'image de biodétection pendant le défilement de la face interne de la main ou du doigt perpendiculairement à la direction de la barrette. Lorsqu'une telle barrette de photodétecteurs est utilisée, l'assemblage optique peut être différent, notamment lorsque chaque photodétecteur est équipé d'une optique, ou microoptique, respective. Le dispositif 11 de formation de l'image de biodétection est alors adapté d'une façon connue de l'Homme du métier, de sorte que le plan de saisie d'image P0 est encore situé à quelques millimètres au dessus de la fenêtre 12 ;
- le signe visuel 40 peut présenter une grande dimension selon la direction A, pour inciter l'utilisateur 100 à placer sa main ou son doigt parallèlement à la fenêtre 12 en la dépliant convenablement. De cette façon, une partie plus grande de la face interne de la main ou du doigt sera située à une distance du plan de saisie d'image de biodétection qui est inférieure à la profondeur de champ ;
- un signe visuel principal peut être projeté sur le dos de la main et, simultanément, des signes visuels secondaires peuvent être projetés sur plusieurs doigts en dehors du pouce, afin d'inciter l'utilisateur à déplier complètement sa main et à la présenter avec une inclinaison adéquate dans le volume de placement de la main ; et
- le dispositif 11 peut présenter une profondeur de champ suffisante pour que l'image de la face interne du doigt 101 soit nette tout en maintenant fixes à la fois le plan de saisie d'image P0 et le plan de repérage, quelque soit l'épaisseur du doigt de l'utilisateur. Une telle profondeur de champ peut être obtenue, de façon connue, en ajustant des paramètres tels que la sensibilité du détecteur 14, l'éclairage et l'ouverture de l'objectif 13.

Enfin, un biodétecteur selon l'invention peut être adapté pour permettre une détection de la main, d'une partie de la main, ou d'un ou plusieurs doigts d'un utilisateur, en fonction des paramètres biologiques sur lesquels sont basées la reconnaissance et/ou l'identification de l'utilisateur.

## Revendications

1. Biodétecteur permettant d'enregistrer une image d'une main ou d'au moins un doigt (101) d'un utilisateur (100), et comprenant :
- un dispositif de formation d'une image de biodétection (11), adapté pour enregistrer ladite image lorsqu'une première face de la main ou du doigt est placée sensiblement dans une portion d'un plan déterminé de saisie d'image (P0),
**caractérisé en ce que** ladite portion de plan de saisie d'image est située dans un volume de placement de la main ou du doigt dépourvu de surface de contact, et **en ce que** le biodétecteur comprend en outre :
- un dispositif (20; 30) de projection de deux composantes (42, 43) d'un signe visuel (40), adapté de sorte que ledit signe est reconstitué à partir desdites composantes dans un plan de repérage (P1) sensiblement parallèle au plan de saisie d'image, ledit plan de repérage étant situé, lorsque l'image de biodétection est formée, à une distance (e) du plan de saisie d'image telle que le signe reconstitué (40) est visible sur une seconde face de la main ou du doigt opposée à ladite première face.

2. Biodétecteur selon la revendication 1, **caractérisé en ce que** plan de saisie d'image (P0) est situé à une distance inférieure à 2 cm d'une fenêtre transparente située devant le dispositif de formation de l'image de biodétection (11).

3. Biodétecteur selon la revendication 1 ou 2, **caractérisé en ce qu'**il comprend en outre un système d'ajustement de la distance (e) entre le plan de saisie d'image (P0) et le plan de repérage (P1), ladite distance étant ajustée en fonction d'une dimension de la main ou du doigt de l'utilisateur (101).

4. Biodétecteur selon la revendication 3, dans lequel la dimension de la main ou du doigt de l'utilisateur (101) comprend une largeur (I) de ladite main ou doigt selon une direction parallèle au plan de saisie d'image (P0).

5. Biodétecteur selon la revendication 4, adapté de sorte que la largeur de la main ou doigt (I) est évaluée à partir d'une image préalable formée par le dispositif de formation d'image de biodétection (11).

6. Biodétecteur selon l'une quelconque des revendications 3 à 5, dans lequel le plan de saisie d'image (P0) est fixe, et la distance (e) entre ledit plan de saisie d'image et le plan de repérage (P1) est ajustée par déplacement dudit plan de repérage.

7. Biodétecteur selon l'une quelconque des revendications précédentes, dans lequel le dispositif de projection des deux composantes du signe visuel (40) comprend deux systèmes de projection (20, 30) adaptés pour projeter respectivement lesdites composantes (42, 43) vers une zone du plan de repérage (P1) dans laquelle le signe visuel est reconstitué, des directions de projection respectives desdits systèmes étant obliques par rapport à une direction (Δ) perpendiculaire au plan de saisie d'image (P0), et se coupant en un point dudit plan de repérage.

8. Biodétecteur selon les revendications 6 et 7, adapté de sorte que le plan de repérage (P1) peut être déplacé en variant symétriquement des inclinaisons respectives des directions de projection des deux composantes du signe visuel (42, 43), dans un plan perpendiculaire au plan de saisie d'image (P0).

9. Biodétecteur selon la revendication 8, comprenant deux miroirs orientables (23, 33) disposés pour modifier les inclinaisons respectives des directions de projection des deux composantes du signe visuel (42, 43).

10. Biodétecteur selon la revendication 8, comprenant deux prismes circulaires à facettes disposés pour modifier les inclinaisons respectives des directions de projection des deux composantes du signe visuel (42, 43).

11. Biodétecteur selon l'une quelconque des revendications précédentes, dans lequel la reconstitution du signe visuel (40) comprend une superposition des deux composantes (42, 43), une complémentarité ou un raccordement des deux composantes l'une à l'autre.

12. Biodétecteur selon l'une quelconque des revendications précédentes, dans lequel le signe visuel reconstitué (40) comprend un idéogramme, un motif géométrique, au moins une lettre et/ou une représentation d'une partie au moins de la main ou du doigt (101).

13. Biodétecteur selon l'une quelconque des revendications précédentes, dans lequel le plan de saisie d'image (P0) et le plan de repérage (P1) forment entre eux un espace (W) d'épaisseur variable correspondant à un profil d'épaisseur de la main de l'utilisateur (100).

14. Biodétecteur selon l'une quelconque des revendications précédentes, dans lequel le signe visuel (40) comprend un signe visuel principal destiné à être projeté sur le dos de la main de l'utilisateur et des signes visuels secondaires destinés à être projetés sur plusieurs doigts de ladite main.

15. Biodétecteur selon l'une quelconque des revendications précédentes, comprenant en outre un système de traitement d'image adapté pour améliorer une qualité de l'image de biodétection enregistrée.

16. Biodétecteur selon l'une quelconque des revendications précédentes, comprenant en outre un système de télémétrie adapté pour déterminer une distance entre la main ou le doigt de l'utilisateur (101) et le dispositif de formation de l'image de biodétection (11), et pour commander un déplacement du plan de repérage (P1) selon une direction perpendiculaire au plan de saisie d'image (Δ).

17. Biodétecteur selon l'une quelconque des revendications précédentes, dans lequel le dispositif de formation de l'image de biodétection (11) comprend un système de focalisation automatique, le biodétecteur comprenant en outre un système de télémétrie adapté pour déterminer une distance entre la main ou le doigt de l'utilisateur (101) et le dispositif de formation de l'image de biodétection (11), et pour commander un réglage du système de focalisation automatique.

18. Procédé de biodétection, mis en oeuvre en utilisant un biodétecteur selon l'une quelconque des revendications précédentes.

19. Procédé selon la revendication 18, comprenant les étapes suivantes :
/a/ de la part de l'utilisateur (100), placer une main ou un doigt (101) dans un champ du dispositif de formation de l'image de biodétection (11) ;
/b/ projeter, sur la main ou le doigt de l'utilisateur, d'un côté opposé au dispositif de formation d'image de biodétection (11), les deux composantes du signe visuel (42, 43) ; et
/c/ de la part de l'utilisateur, modifier une hauteur (F) de la main ou du doigt devant le dispositif de formation d'image de biodétection, jusqu'à ce que le signe visible (40) apparaisse reconstitué sur une face de ladite main ou doigt opposée au dispositif de formation d'image de biodétection.

20. Procédé selon la revendication 19, comprenant en outre l'étape suivante, effectuée entre les étapes /a/ et /b/ :
/a1/ ajuster une distance (e) entre le plan de saisie d'image (P0) et le plan de repérage (P1) en fonction d'une dimension de la main ou du doigt de l'utilisateur (101).

21. Procédé selon la revendication 20, suivant lequel ladite dimension comprend une largeur (I) de la main ou du doigt (101), selon une direction parallèle au plan de saisie d'image (P0), le procédé comprenant en outre les étapes suivantes, effectuées entre les étapes /a/ et /a1/ :
/a11/ former une image préalable de la main ou du doigt de l'utilisateur au moyen du dispositif de formation d'image de biodétection (11);
/a12/ évaluer, d'après ladite image préalable, la largeur (I) de la main ou du doigt ; et
/a13/ déduire de ladite largeur une valeur d'épaisseur de la main ou du doigt de l'utilisateur,
la distance (e) entre le plan de saisie d'image (P0) et le plan de repérage (P1) étant ajustée à l'étape /a1/ à la valeur de l'épaisseur de la main ou du doigt de l'utilisateur déduite à l'étape /a13/.

## Claims

1. A biodetetector making it possible for an image of a hand or of at least one finger (101) of a user (100) to be recorded, and comprising:
- a biodetection image formation device (11), adapted for recording said image when a first face of the hand or of the finger is placed substantially within a portion of an image capture plane (P0),
**characterized in that** said portion of image capture plane is situated within a placement volume for the hand or for the finger devoid of any contact surface, and **in that** the biodetector also comprises:
- a device (20, 30) for projecting two components (42, 43) of a visual sign (40), adapted so that said sign is recomposed from said components in a locating plane (P1) substantially parallel to the image capture plane, said locating plane being situated, when the biodetection image is formed, at a distance (e) from the image capture plane such that the recomposed sign (40) is visible on a second face of the hand or of the finger opposite said first face.

2. The biodetector as claimed in claim 1,
**characterized in that** the image capture plane (P0) is situated at a distance of less than 2 cm from a transparent window situated in front of the biodetection image formation device (11).

3. The biodetector as claimed in claim 1 or 2, **characterized in that** it also comprises a system for adjusting the distance (e) between the image capture plane (P0) and the locating plane (P1), said distance being adjusted as a function of a dimension of the hand or of the finger of the user (101).

4. The biodetector as claimed in claim 3, in which the dimension of the hand or of the finger of the user (101) comprises a width (I) of said hand or finger in a direction parallel to the image capture plane (P0).

5. The biodetector as claimed in claim 4, adapted so that the width of the hand or finger (I) is evaluated based on a preliminary image formed by the biodetection image formation device (11).

6. The biodetector as claimed in any one of claims 3 to 5, in which the image capture plane (P0) is fixed, and the distance (e) between said image capture plane and the locating plane (P1) is adjusted by displacement of said locating plane.

7. The biodetector as claimed in any one of the preceding claims, in which the device for projection of the two components of the visual sign (40) comprises two projection systems (20, 30) adapted for respectively projecting said components (42, 43) toward a region of the locating plane (P1) in which the visual sign is recomposed, respective projection directions of said systems being oblique with respect to a direction (Δ) perpendicular to the image capture plane (P0), and intersecting at a point of said locating plane.

8. The biodetector as claimed in claims 6 and 7, adapted so that the locating plane (P1) can be displaced by symmetrically varying respective inclinations of the directions of projection of the two components of the visual sign (42, 43) in a plane perpendicular to the image capture plane (P0)

9. The biodetector as claimed in claim 8, comprising two orientable mirrors (23, 33) arranged in order to modify the respective inclinations of the directions of projection of the two components of the visual sign (42, 43).

10. The biodetector as claimed in claim 8,
comprising two facetted circular prisms arranged in order to modify the respective inclinations of the directions of projection of the two components of the visual sign (42, 43).

11. The biodetector as claimed in any one of the preceding claims, in which the recomposition of the visual sign (40) comprises a superimposition of the two components (42, 43), a mutual complementarity or a mutual connection of the two components.

12. The biodetector as claimed in any one of the preceding claims, in which the recomposed visual sign (40) comprises a pictogram, a geometrical pattern, at least one letter and/or a representation of at least a part of the hand or of the finger (101).

13. The biodetector as claimed in any one of the preceding claims, in which the image capture plane (P0) and the locating plane (P1) form between them a gap (W) of variable thickness corresponding to a thickness profile of the hand of the user (100).

14. The biodetector as claimed in any one of the preceding claims, in which the visual sign (40) comprises a main visual sign intended to be projected onto the back of the hand of the user and secondary visual signs intended to be projected onto several fingers of said hand.

15. The biodetector as claimed in any one of the preceding claims, also comprising an image processing system adapted for improving a quality of the recorded biodetection image.

16. The biodetector as claimed in any one of the preceding claims, also comprising a telemetry system adapted for determining a distance between the hand or the finger of the user (101) and the biodetection image formation device (11), and for controlling a displacement of the locating plane (P1) in a direction perpendicular to the image capture plane (Δ).

17. The biodetector as claimed in any one of the preceding claims, in which the biodetection image formation device (11) comprises an autofocusing system, the biodetector also comprising a telemetry system adapted for determining a distance between the hand or the finger of the user (101) and the biodetection image formation device (11), and for controlling an adjustment of the autofocusing system.

18. A biodetection method, implemented by using a biodetector as claimed in any one of the preceding claims.

19. The method as claimed in claim 18, comprising the following steps:
/a/ by the user (100), placing a hand or a finger (101) in a field of the biodetection image formation device (11);
/b/ projecting, onto the hand or the finger of the user, on a side opposite the biodetection image formation device (11), the two components of the visual sign (42, 43); and
/c/ by the user, modifying a height (F) or his hand or of his finger in front of the biodetection image formation device until the visual sign (40) appears recomposed on a face of said hand or finger opposite the biodetection image formation device.

20. The method as claimed in claim 19, also comprising the following step, carried out in between the steps /a/ and /b/:
/a1/ adjusting a distance (e) between the image capture plane (P0) and the locating plane (P1) as a function of a dimension of the hand or of the finger of the user (101).

21. The method as claimed in claim 20, in which said dimension comprises a width (1) of the hand or of the finger (101), in a direction parallel to the image capture plane (P0), the method also comprising the following steps, carried out in between the steps /a/ and /a1/:
/a11/ forming a preliminary image of the hand or of the finger of the user by means of the biodetection image formation device (11);
/a12/ evaluating, from said preliminary image, the width (1) of the hand or of the finger; and
/a13/ deriving from said width a thickness value of the hand or of the finger of the user,
the distance (e) between the image capture plane (P0) and the locating plane (P1) being adjusted in step /a1/to the value of the thickness of the hand or of the finger of the user deduced in step /a13/.

## Patentansprüche

1. Biodetektor, der es erlaubt, ein Bild einer Hand oder mindestens eines Fingers (101) eines Benutzers (100) aufzuzeichnen, Folgendes aufweisend:
- eine Vorrichtung zum Bilden eines Biodetektionsbilds (11), die das Bild aufzeichnen kann, wenn eine erste Seite der Hand oder des Fingers im Wesentlichen in einen Abschnitt einer bestimmten Bilderfassungsebene (P0) platziert wird,
**dadurch gekennzeichnet, dass** der Abschnitt der Bilderfassungsebene in einem Platzierungsvolumen der Hand oder des Fingers ohne Kontaktfläche liegt, und dass der Biodetektor ferner Folgendes aufweist:
- eine Vorrichtung (20, 30) zum Projizieren von zwei Komponenten (42, 43) eines visuellen Zeichens (40), die derart gestaltet ist, dass das Zeichen ausgehend von den Bestandteilen in einer Ortungsebene (P1), die im Wesentlichen zu der Bilderfassungsebene parallel ist, wiederhergestellt wird, wobei sich die Orientierungsebene, wenn das Biodetektionsbild gebildet wird, in einer derartigen Entfernung (e) von der Bilderfassungsebene gebildet wird, dass das wiederhergestellte Bild (40) auf einer zweiten Seite der Hand oder des Fingers, die der ersten Seite entgegengesetzt ist, sichtbar ist.

2. Biodetektor nach Anspruch 1, **dadurch gekennzeichnet, dass** die Bilderfassungsebene (P0) in einer Entfernung von weniger als 2 cm von einem durchsichtigen Fenster liegt, das vor der Biodetektions-Bilderzeugungsvorrichtung (11) liegt.

3. Biodetektor nach Anspruch 1 oder 2, **dadurch gekennzeichnet, dass** er ferner ein System zum Anpassen der Entfernung (e) zwischen der Bilderfassungsebene (P0) und der Ortungsebene (P1) aufweist, wobei die Entfernung in Abhängigkeit von einem Maß der Hand oder des Fingers (101) des Benutzers angepasst wird.

4. Biodetektor nach Anspruch 3, bei dem das Maß der Hand oder des Fingers des Benutzers (101) eine Breite (I) der Hand oder des Fingers entlang einer Richtung parallel zu der Bilderfassungsebene (P0) aufweist.

5. Biodetektor nach Anspruch 4, der derart angepasst ist, dass die Breite (I) der Hand oder des Fingers ausgehend von einem zuvor von der Biodetektions-Bilderzeugungsvorrichtung (11) gebildeten Bild beurteilt wird.

6. Biodetektor nach einem der Ansprüche 3 bis 5, bei dem die Bilderfassungsebene (P0) stationär ist, und die Entfernung (e) zwischen der Bilderfassungsebene und der Ortungsebene (P1) durch Bewegen der Ortungsebene angepasst wird.

7. Biodetektor nach einem der vorhergehenden Ansprüche, bei dem die Projektionsvorrichtung der zwei Bestandteile des visuellen Zeichens (40) zwei Projektionssysteme (20, 30) aufweist, die jeweils die Bestandteile (42, 43) zu einer Zone der Ortungsebene (P1), in der das visuelle Zeichen wieder hergestellt wird, projizieren können, wobei die jeweiligen Projektionsrichtungen der Systeme zu einer Richtung (Δ) senkrecht zu der Bilderfassungsebene (P0) schräg sind und sich in einem Punkt der Ortungsebene schneiden.

8. Biodetektor nach den Ansprüchen 6 und 7, der derart angepasst ist, dass die Ortungsebene (P1) unter symmetrischem Variieren der jeweiligen Neigungen der Projektionsrichtungen der zwei Bestandteile des visuellen Zeichens (42, 43) in einer Ebene senkrecht zu der Bilderfassungsebene (P0) bewegt werden kann.

9. Biodetektor nach Anspruch 8, der zwei ausrichtbare Spiegel (23, 33) aufweist, die angeordnet werden können, um die jeweiligen Neigungen der Projektionsrichtungen der zwei Bestandteile des visuellen Zeichens (42, 43) zu ändern.

10. Biodetektor nach Anspruch 8, der zwei kreisförmige Prismen mit Facetten aufweist, die angeordnet sind, um die jeweiligen Neigungen der Projektionsrichtungen der zwei Bestandteile des visuellen Zeichens (42, 43) zu ändern.

11. Biodetektor nach einem der vorhergehenden Ansprüche, bei dem das Wiederherstellen des visuellen Zeichens (40) ein Überlagern der zwei Bestandteile (42, 43), eine Komplementarität oder einen Anschluss der zwei Bestandteile aneinander aufweist.

12. Biodetektor nach einem der vorhergehenden Ansprüche, bei dem das wiederhergestellte visuelle Zeichen (40) ein Ideogramm, ein geometrisches Muster, mindestens einen Buchstaben und/oder eine Darstellung zumindest eines Teils der Hand oder des Fingers (101) aufweist.

13. Biodetektor nach einem der vorhergehenden Ansprüche, bei dem die Bilderfassungsebene (P0) und die Ortungsebene (P1) untereinander einen Raum (W) mit einer variablen Stärke bilden, die einem Stärkenprofil der Hand des Benutzers (100) entspricht.

14. Biodetektor nach einem der vorhergehenden Ansprüche, bei dem das visuelle Zeichen (40) ein visuelles Hauptzeichen aufweist, das dazu bestimmt ist, auf den Rücken der Hand des Benutzers projiziert zu werden, und visuelle Hilfszeichen, die dazu bestimmt sind, auf mehrere Finger der Hand projiziert zu werden.

15. Biodetektor nach einem der vorhergehenden Ansprüche, der ferner ein Bildverarbeitungssystem aufweist, das eine aufgezeichnete Qualität des aufgezeichneten Biodetektionsbilds verbessern kann.

16. Biodetektor nach einem der vorhergehenden Ansprüche, der ferner ein Entfernungsmessungssystem aufweist, das eine Entfernung zwischen der Hand oder dem Finger des Benutzers (101) und der Biodetektions-Bilderzeugungsvorrichtung (11) bestimmen kann, und eine Bewegung der Ortungsebene (P1) entlang einer Richtung senkrecht zu der Bilderfassungsebene (Δ) steuern kann.

17. Biodetektor nach einem der vorhergehenden Ansprüche, bei dem die Biodetektions-Bilderzeugungsvorrichtung (11) ein System zum automatischen Fokussieren aufweist, wobei der Biodetektor ferner ein Entfernungsmessungssystem aufweist, das eine Entfernung zwischen der Hand oder dem Finger (101) des Benutzers und der Biodetektions-Bilderzeugungsvorrichtung (11) bestimmen und eine Einstellung des automatischen Fokussierungssystems steuern kann.

18. Biodetektionsverfahren, das unter Einsatz eines Biodetektors nach einem der vorhergehenden Ansprüche umgesetzt wird.

19. Verfahren nach Anspruch 18, das die folgenden Schritte aufweist:
a) seitens des Benutzers (100) Platzieren einer Hand oder eines Fingers (101) in einem Feld der Biodetektions-Bilderzeugungsvorrichtung (11);
b) Projizieren auf die Hand oder den Finger des Benutzers auf einer Seite, die der Biodetektions-Bilderzeugungsvorrichtung (11) entgegengesetzt ist, der zwei Bestandteile des visuellen Zeichens (42, 43); und
c) seitens des Benutzers Ändern einer Höhe (F) der Hand oder des Fingers vor der Biodetektions-Bilderzeugungsvorrichtung, bis das sichtbare Zeichen (40) auf einer Seite der Hand oder des Fingers, die der Biodetektions-Bilderzeugungsvorrichtung entgegengesetzt ist, wiederhergestellt erscheint.

20. Verfahren nach Anspruch 19, das ferner den folgenden Schritt aufweist, der zwischen den Schritten a) und b) ausgeführt wird:
a1) Anpassen einer Entfernung (e) zwischen der Bilderfassungsebene (P0) und der Ortungsebene (P1) in Abhängigkeit von einem Maß der Hand oder des Fingers (101) des Benutzers.

21. Verfahren nach Anspruch 20, bei dem das Maß eine Breite (I) der Hand oder des Fingers (101) entlang einer Richtung parallel zur Bilderfassungsebene (P0) aufweist, wobei das Verfahren ferner die folgenden Schritte aufweist, die zwischen den Schritten a) und a1) ausgeführt werden:
a11) Bilden eines Vorabbilds der Hand oder des Fingers des Benutzers mittels der Biodetektions-Bilderzeugungsvorrichtung (11);
a12) gemäß dem Vorabbild Beurteilen der Breite (I) der Hand oder des Fingers; und
a13) Ableiten ausgehend von der Breite eines Stärkenwerts der Hand oder des Fingers des Benutzers,
wobei die Entfernung (e) zwischen der Bilderfassungsebene (P0) und der Ortungsebene (P1) im Schritt a1) an den Stärkenwert der Hand oder des Fingers des Benutzers, der im Schritt a13) abgeleitet wird, angepasst wird.
